# NEUE EUROPÄISCHE PATENTSCHRIFT

(11) **EP 2 932 340 B2**
(45) Veröffentlichungstag und Bekanntmachung des Hinweises auf die Entscheidung über den Einspruch: **09.11.2022**
(45) Hinweis auf die Patenterteilung: 04.12.2019
(21) Anmeldenummer: 13802940.0
(22) Anmeldetag: 09.12.2013
(51) Int. Cl.: G05B 23/02

(54) **ANALYSE EINES GERÄUSCHES EINES HAUSHALTSGERÄTES**
ANALYZING NOISE IN A HOUSEHOLD APPLIANCE
ANALYSE D'UN BRUIT ÉMIS PAR UN APPAREIL ÉLECTROMÉNAGER

(30) Priorität: 14.12.2012 DE 102012223237
(43) Veröffentlichungstag der Anmeldung: 21.10.2015
(73) Patentinhaber: BSH Hausgeräte GmbH, 81739 München (DE)
(72) Erfinder: GARBE, Thomas, 85521 Ottobrunn (DE); HÄPP, Claudia, 80639 München (DE); PIETSCH, Ingo, 81829 München (DE)
(86) Internationale Anmeldenummer: PCT/EP2013/075934
(87) Internationale Veröffentlichungsnummer: WO 2014/090738

(56) Entgegenhaltungen:
- EP-A1- 2 048 274
- EP-A2- 2 573 247
- EP-A2- 2 661 019
- WO-A1-2008/144864
- WO-A1-2012/015404
- WO-A2-2011/145873
- WO-A2-2012/091384
- DE-A1- 10 214 794
- DE-A1-102007 058 936
- US-A1- 2011 050 441
- US-A1- 2011 125 300

## Beschreibung

Die Erfindung betrifft ein Verfahren und ein mobiles Endgerät zur Analyse zumindest eines Geräusches zumindest eines Haushaltsgerätes sowie ein Computerprogrammprodukt.

Der tägliche Betrieb von Haushaltsgeräten äußert sich durch Abgabe von Geräuschen bzw. Betriebsgeräuschen. Diese können zum einen normale betriebsbedingte Geräusche sein, wie sie beispielsweise beim Mahlen von Kaffee in einer Kaffeemaschine oder Kaffeemühle oder beim Waschen oder Schleudern von Wäsche in einer Waschmaschine verursacht werden. Andererseits können Betriebsgeräusche auch im Zusammenhang mit Gerätedefekten entstehen, z.B. bei Verschleiß von Lagern.

In Bedienungs- oder Gebrauchsanleitungen für Haushaltsgeräte sind die bei Normalbetrieb auftretenden Betriebsgeräusche teilweise verbal in Textform beschrieben, kategorisiert nach unterschiedlichen Geräuscharten, z.B.:
- Normale Geräusche: Brummen, Motoren laufen (z. B. Kälteaggregate, Ventilator).
- Blubbernde, surrende oder gurgelnde Geräusche: Kältemittel fließt durch die Rohre.
- Klicken: Ein- und Ausschalten von Motoren, Schalter oder Magnetventilen.
- Knacken: Automatisches Abtauen erfolgt

Vom Normalbetrieb abweichende Geräusche, z.B. im Falle eines Gerätedefekts verursachte Störgeräusche, sind üblicherweise nicht oder nur ungenügend in den Anleitungen beschrieben. Dies liegt zum einen daran, dass verbal in Textform beschriebene Geräusche für einen Nutzer oder Käufer eines Haushaltsgerätes nur schwer zu unterscheiden sind. Erschwerend kommt hinzu, dass sich Geräusche allgemein schlecht bzw. unpräzise beschreiben lassen.

Dies hat zur Folge, dass fehlerhafte Betriebszustände der jeweiligen Haushaltsgeräte insbesondere hinsichtlich der in einem Fehlerfall auftretenden Störgeräusche z.B. durch den Nutzer schwer als solche erkennbar sind. Als weiterer Nachteil sind geeignete Anweisungen zur Behebung von Störgeräuschen selten zu finden oder selten für den Nutzer hilfreich.

Aus US 2011/050441 A1 und WO 2012/091384 A2 ist ein System zur Diagnose fehlerhafter Haushaltsgeräte unter Verwendung eines Mobiltelefons bekannt. Dabei ist das Haushaltsgerät fähig, Fehler selbst zu diagnostizieren, Produktinformationen und Fehlerdiagnosen in ein akustisches Signal zu kodieren, und dieses mittels eines Lautsprechers oder Summers auszugeben. Das Mobiltelefon erfasst die akustische Signalfolge und schickt diese an eine zentrale Stelle, oder extrahiert Diagnoseinformationen in einer auf dem Mobiltelefon ablaufenden Anwendung.

Die DE 10 2007 058936 A1 beschreibt eine Sensoreinrichtung für ein Haushaltsgerät umfassend mindestens einer Anschlussmöglichkeit für mindestens einen akustischen Sensor zum Erfassen eines Geräusches innerhalb des Haushaltsgeräts, und einer Auswerteeinheit, die derart eingerichtet ist, dass das Geräusch erkennbar ist und abhängig von dem Geräusch ein Ausgangssignal erzeugbar ist.

Die **Aufgabe** der Erfindung besteht darin, die vorstehend genannten Nachteile zu vermeiden und insbesondere ein Verfahren zur Analyse zumindest eines Geräusches zumindest eines Haushaltsgerätes anzugeben welches beispielsweise für die Erfassung von bei Haushaltsgeräten auftretenden Gerätedefekten geeignet ist.

Diese Aufgabe wird gemäß den Merkmalen der unabhängigen Patentansprüche gelöst. Weiterbildungen der Erfindung ergeben sich auch aus den abhängigen Ansprüchen.

Zur Lösung der Aufgabe wird ein Verfahren zur Analyse zumindest eines Geräusches zumindest eines Haushaltsgerätes vorgeschlagen, bei dem zumindest ein Betriebsgeräusch des zumindest einen Haushaltsgerätes erfasst und eine Analyse des zumindest einen erfassten Geräusches durchgeführt wird. Basierend auf der Analyse wird zumindest eine vorgegebene Aktion durchgeführt.

Durch das vorgeschlagene Verfahren können bei Betrieb eines Haushaltsgerätes erzeugte Geräusche bzw. Betriebsgeräusche auf für den Nutzer einfache Art und Weise erfasst, analysiert und das Ergebnis der Analyse gegebenenfalls weiterverarbeitet werden (z.B. im Rahmen eines Kundendienst-Service). Vorteilhaft wird eine für den Nutzer besonders komfortable Bedienbarkeit und Nutzung des Haushaltsgerätes erreicht. So kann z.B. der Kunde jederzeit eine Analyse des Betriebsgeräusches eines Haushaltsgerätes vornehmen, was dem Nutzer eine zusätzliche Sicherheit gibt, entweder Reparatur- oder Wartungsmaßnahmen durchführen zu lassen oder dass mit dem analysierten Haushaltsgerät alles in Ordnung ist bzw. aktuell keine Störungen vorliegen.

Das durch das Haushaltsgerät abgegebene bzw. verursachte Geräusch oder Betriebsgeräusch kann jede Art von im Umfeld eines Haushaltsgerätes auftretendes Geräusch sein, sowohl im aktiven als auch im nichtaktiven Betrieb (z.B. im ein- oder ausgeschalteten Betrieb oder im Standby-Betrieb). Das abgegebene Geräusch ist üblicherweise eine Überlagerung einer Vielzahl von Geräuschen bzw. Einzelgeräuschen, beispielsweise verursacht durch Komponenten des Haushaltsgerätes (z.B. Motor, Pumpe oder Schalter) wobei im Rahmen der vorgeschlagenen Lösung auch Einzelsignale verarbeitet werden können. Ein Geräusch kann jedoch auch durch zumindest einen im Umfeld eines Haushaltsgerätes angeordneten Gegenstand verursacht werden, wie z.B. durch in einem Kühlschrank angeordnete Nahrungsmittel oder durch in einer Waschmaschine befindliche Textilien.

Eine vorgegebene Aktion kann jede Art von ausführbarer Aktion sein, einschließlich z.B. des Generierens zumindest einer das Analyse-Ergebnis repräsentierenden oder anzeigenden Information oder eines entsprechenden Signals. Auch kann jede Art von Steuersignal oder Steuerinformation basierend auf der Analyse erzeugt und/oder weitergeleitet werden.

Eine vorgegebene Aktion im Rahmen des vorgeschlagenen Verfahrens kann aber auch derart ausgestaltet sein, dass keine weitere Aktion, Aktivität oder Handlung erfolgt oder initiiert wird, bzw. keine Information oder Signal erzeugt wird.

Im Rahmen der vorgeschlagenen Analyse wird das zumindest eine erfasste Geräusch erfindungsgemäß mit weiteren Geräuschen verglichen. Ausführungsformen, bei denen nur ein weiteres Geräusch verwendet wird, sind nicht Gegenstand der Erfindung. Das zumindest eine weitere Geräusch kann beispielsweise mindestens ein Referenz-Geräusch sein, das jeweils kennzeichnend für einen bestimmten Betriebszustand des Haushaltsgerätes ist oder spezifisch für ein durch einen Defekt des Haushaltsgerätes verursachtes Störgeräusch ist.

Der Vergleich des zumindest einen erfassten Geräusches mit den Referenz-Geräuschen kann z.B. in der Art und Weise erfolgen, dass dasjenige Referenz-Geräusch aus der Vielzahl von Referenz-Geräuschen bestimmt wird, das dem zumindest einen erfassten Geräusch am ähnlichsten ist. Als Maß für die Ähnlichkeit kann ein mehrdimensionaler Abstand genutzt werden. Auch ist es möglich, dass immer der am besten passende Treffer in den Referenz-Geräuschen verwendet wird. Erfindungsgemäß werden aber immer mehrere Treffer als Ergebnis der Analyse ausgegeben. Alternativ kann das Ähnlichkeitsmaß einen bestimmten Schwellwert erfordern, welcher für das Erkennen eines Treffers erreicht werden muss - bei Nichterreichen des Schwellwertes wird folglich kein Treffer erkannt und damit z.B. als vorgegebene Aktion "keine Aktion" durchgeführt. Erfindungsgemäß werden mehrere Treffer als Ergebnis der Analyse ausgegeben (z.B. bei Überlagerung mehrere Einzelgeräusche bzw. Störsignalen).

Durch den Vergleich bzw. Abgleich von erfassten Geräuschen mit Referenz-Geräuschen, wird eine besonders schnelle und für den Nutzer komfortabel ausführbare Analyse von Geräuschen ermöglicht.

Eine andere Weiterbildung ist es, dass das zumindest eine weitere Geräusch zentral (vorzugsweise in einer zentralen Einheit) gespeichert ist. Zentral gespeicherte bzw. hinterlegte Geräusche können besonders einfach und auf unkomplizierte Art und Weise aktualisiert und verwaltet werden.

Bei dem vorgeschlagenen Verfahren wird das zumindest eine Geräusch mit Hilfe eines mobilen Endgerätes erfasst. Ein mobiles Endgerät kann jede Art mobiler Datenverarbeitungseinrichtung sein, welcher bzw. welchem Mittel zum Erfassen von Geräuschen (wie z.B. ein Mikrofon) zugeordnet sind. So sind derartige Geräte oft in aktuellen Haushalten vorhanden, z.B. Laptops, Tablet-PCs, Musik-Wiedergabegeräte mit akustischen Aufzeichnungsfunktionen sowie Mobiltelefone, insbesondere Smartphones.

Erfindungsgemäß erfolgt die Analyse des zumindest einen erfassten Geräusches durch eine auf dem Endgerät ablaufende/ablauffähige Anwendung.

Bei dieser Ausführung kann die Analyse-Anwendung in einem Speicher des Endgerätes gespeichert sein.

Im Rahmen einer zusätzlichen Weiterbildung ist das Endgerät mit einem Kommunikationsnetz verbindbar.

Das Kommunikationsnetz kann dabei jede Art von Informationen bzw. Daten übermittelndes Kommunikationsnetz oder ein aus mehreren Teil- oder Subnetzen bestehendes globales Kommunikationsnetz sein (z.B. Internet). Ein Kommunikationsnetz kann insbesondere auch ein gemäß einem der aktuellen Mobilfunk-Standards (GSM, UMTS, CDMA, LTE, WIFI) ausgestaltetes Mobilfunknetz sein, das optional einen Anschluss an das Internet aufweist bzw. mit diesem zumindest vorübergehend verbunden werden kann. Alternativ kann das Kommunikationsnetz Bestandteil eines Firmennetzes sein, das einem Hersteller von Haushaltsgeräten oder dessen Kundendienst-Center zugeordnet ist. Das Kommunikationsnetz kann ferner als in einem Haushalt angeordnetes Kommunikationsnetz ("Heimnetz") ausgestaltet sein, mit dem das mobile Endgerät mittels drahtloser oder drahtgebundener Zugangstechnologie zumindest temporär verbunden werden kann. Über das Heimnetz kann das mobile Endgerät zudem mit dem Internet verbunden werden. Zudem kann auch das Haushaltsgerät an das Heimnetz zumindest temporär angeschlossen sein.

Zentral in einem Kommunikationsnetz angeordnete Speicher (auch als virtuelle Speicher bezeichnet) stellen sogenannte "Cloud-Speicher" bzw. Netzwerkspeicher dar, mittels denen das vorgeschlagene Verfahren besonders effizient implementiert werden kann. Derartige Lösungen umfassen beispielsweise auch "Online-Datenbanken". Die für die Analyse des zumindest einen erfassten Geräusches erforderlichen Referenz-Geräusche können in dem Cloud-Speicher bzw. in der Online-Datenbank gespeichert sein. Ein Cloud-Speicher kann auch eine Vielzahl von in dem Kommunikationsnetz angeordnete Speicher umfassen. Ein dem Hersteller eines Haushaltsgerätes zugeordnetes Kundendienst-Center kann z.B. die in einer Online-Datenbank hinterlegten Geräusche schnell und ohne großen Aufwand aktualisieren sowie den Zugriff auf diese Information weltweit ermöglichen.

Neben dem Speichern von Geräuschen zentral in dem Kommunikationsnetz können auch die erfassten Geräusche zentral in dem Kommunikationsnetz analysiert werden.

Dies geschieht z.B. durch eine zentral im Kommunikationsnetz angeordnete Analyse-Anwendung (auch bezeichnet als "virtuelle Anwendung" oder "Cloud-Anwendung").

Vorzugsweise ist das Endgerät als Mobiltelefon, insbesondere Smartphone ausgestaltet. Smartphones umfassen für die Durchführung des vorgeschlagenen Verfahrens erforderlichen Basisfunktionen, z.B. Mikrofon, Anzeigevorrichtung, Prozessor zum Ausführen von Anwendungen ("Apps") sowie Mittel zum Zugriff auf das Internet und insbesondere auf darin angeordnete virtuelle Speicher bzw. Online-Datenbanken.

Eine nächste Weiterbildung besteht darin, dass das zumindest eine weitere Geräusch in einem dem Endgerät zugeordneten Speicher gespeichert ist.

Bei dieser Ausgestaltungsvariante ist zur Durchführung des vorgeschlagenen Verfahrens kein zusätzlicher Zugriff auf in einem Kommunikationsnetz gespeicherte Informationen wie beispielsweise auf Online-Datenbanken erforderlich, was eine besonders schnelle und ggf. von einer Kommunikationsverbindung unabhängige Ausführung der vorgeschlagenen Geräusch-Analyse ermöglicht.

Eine Ausgestaltung ist es, dass basierend auf der Analyse ein fehlerhafter Betriebszustand des zumindest einen Haushaltsgerätes bestimmt wird.

Dadurch kann das vorgeschlagene Verfahren beispielsweise als erste Maßnahme bei bereits auftretenden oder vermuteten Störgeräuschen oder Defekten von Haushaltsgeräten eingesetzt werden. Ein üblicherweise mit Kosten verbundener Einsatz eines Kundendienstservice vor Ort kann insbesondere dann vermieden werden, wenn als Ergebnis der Analyse kein Defekt festgestellt wird bzw. der Nutzer über den normalen Zustand des Gerätes informiert wird.

Eine weitere Ausführungsform besteht darin, dass ein Fehler und/oder eine Fehlerart des Haushaltsgerätes bestimmt wird.

Eine nächste Ausgestaltung ist es, dass das zumindest eine erfasste Geräusch und/oder ein Ergebnis der Analyse an ein Kundendienst-Center weitergeleitet wird.

So kann das Kundendienst-Center als zusätzliche Einrichtung zur weiteren Verarbeitung des Analyse-Ergebnisses eingesetzt werden, beispielsweise zur genauen Fehleridentifizierung. Alternativ oder zusätzlich kann das Geräusch ohne vorherige Analyse direkt an das Kundendienst-Center zur Weiterverarbeitung übermittelt werden.

Auch ist es eine Ausgestaltung, dass bei der Analyse des zumindest einen erfassten Geräusches zumindest ein weiterer akustischer Parameter berücksichtigt wird.

Vorteilhaft können hierbei eine Vielzahl akustischer Parameter bei der Analyse des Geräusches genutzt werden, z.B. Frequenz- bzw. Spektralverläufe. Auswertungen können durch verbreitete Algorithmen zur Analyse akustischer Signale implementiert werden.

Wie bereits erwähnt können neben den bei Normalbetrieb eines Haushaltsgerätes auftretenden Geräuschen bzw. Betriebsgeräuschen auch weitere Geräusche auftreten.

Gemäß einer nicht durch die Ansprüche abgedeckten Weiterbildung können auch solche Geräusche erfasst und analysiert werden.

Beispielsweise kann in einem Kühlschrank, bedingt durch Temperaturschwankungen, eine mit Flüssigkeit gefüllte Glasflasche zerplatzen. Das Geräusch der zerplatzenden Flasche kann im Rahmen der Analyse erkannt und der Nutzer entsprechend informiert werden. Vorteilhaft ist hierbei das Haushaltsgerät selbst mit geeigneten Mitteln zum Erfassen von Geräuschen wie z.B. einem Mikrofon ausgestattet und optional z.B. über das Heimnetz mit dem Internet verbindbar. Das Informieren des Nutzers kann beispielsweise visuell durch ein Leuchtelement erfolgen oder mit Hilfe eines akustischen Signals. Bei an ein Heimnetz angeschlossenen Haushaltsgeräten kann der Nutzer mittels jeder Art von elektronischer Informationsübermittlung, z.B. SMS, E-Mail oder FAX informiert werden.

Die Art des betrachteten Haushaltsgeräts, insbesondere elektrischen Haushaltsgeräts, ist nicht beschränkt und kann Haushalts-Großgeräte und/oder Haushaltskleingeräte umfassen. Das Haushaltsgerät mag insbesondere mindestens ein Gargerät umfassen, z.B. einen Backofen, eine Mikrowelle oder einen Dampfgarer. Das mindestens eine Haushaltsgerät mag auch mindestens ein Kühlgerät, z.B. einen Kühlschrank und/oder eine Kühltruhe umfassen. Das mindestens eine Haushaltsgerät mag auch mindestens ein Wäschebehandlungsgerät umfassen, z.B. eine Waschmaschine oder ein Wäschetrockner. Das mindestens eine Haushaltsgerät mag ferner mindestens ein Spülgerät umfassen, z.B. einen Geschirrspüler. Das mindestens eine Haushaltsgerät mag insbesondere mindestens eine Kaffemaschine umfassen. Das mindestens eine Haushaltsgerät mag aber z.B. auch mindestens einen Toaster umfassen.

Die vorstehend genannte Aufgabe wird auch gelöst durch ein mobiles Endgerät zur Analyse zumindest eines Betriebsgeräusches zumindest eines Haushaltsgerätes, mit einer Erfassungseinheit zum Erfassen zumindest eines Geräusches des zumindest einen Haushaltsgerätes. Das mobile Endgerät umfasst weiterhin eine Verarbeitungseinheit die derart ausgestaltet ist, dass eine Analyse des zumindest einen erfassten Geräusches und zumindest eine vorgegebene Aktion basierend auf der Analyse durchgeführt wird.

Die hier vorgestellte Lösung umfasst ferner ein Computerprogrammprodukt, das direkt in einen Speicher einer digitalen Datenverarbeitungseinrichtung ladbar ist, umfassend Programmteile, die dazu geeignet sind, Schritte des hier vorgestellten Verfahrens durchzuführen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden schematischen Beschreibung von Ausführungsbeispielen, die im Zusammenhang mit der Zeichnung näher erläutert werden. Dabei können zur Übersichtlichkeit gleiche oder gleichwirkende Elemente mit gleichen Bezugszeichen versehen sein.

Es zeigt:

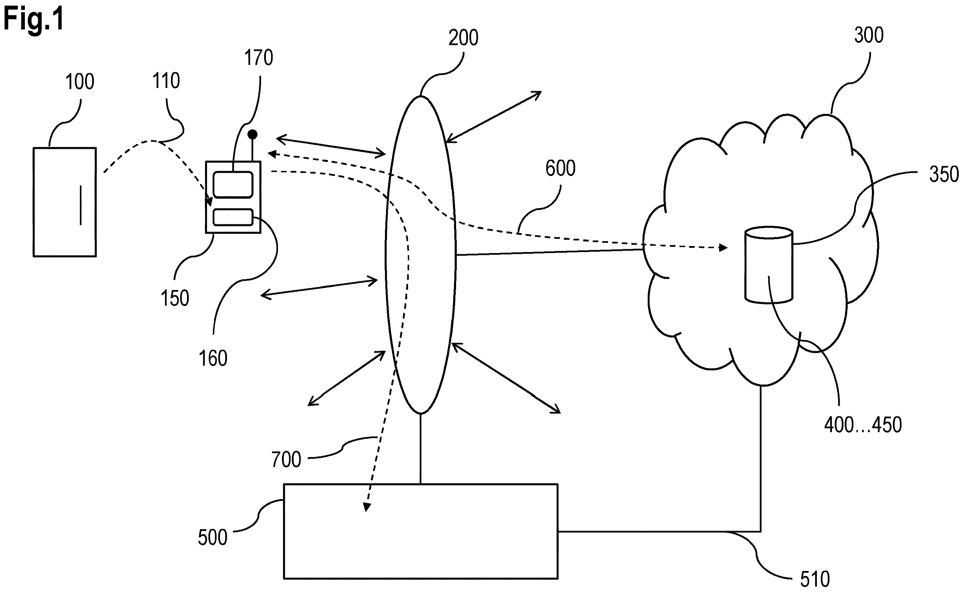

- Fig.1: anhand einer schematischen Darstellung ein Anwendungsszenario zur Durchführung des vorgeschlagenen Verfahrens

**Fig.1** zeigt ein einem Haushalt zugeordnetes Haushaltsgerät 100, welches beispielsweise als Kühlschrank ausgestaltet ist. Der Normalbetrieb des Kühlschrankes 100 äußert sich akustisch durch ein wahrnehmbares "normales" Betriebsgeräusch, welches üblicherweise eine Überlagerung einer Vielzahl von Geräuschen bzw. Einzelgeräuschen darstellt, wie z.B. Brummen der die Kälteaggregate und Ventilatoren antreibenden Motoren oder blubbernde, gurgelnde oder surrende Geräusche welche durch das durch Rohre fließende Kältemittel verursacht werden. Weitere Einzelgeräusche sind durch das Klicken von Schaltern und Magnetventilen verursacht.

Für das nachfolgende Ausführungsbeispiel sei angenommen, dass der Kühlschrank 100 einen Gerätedefekt aufweist, was sich akustisch durch ein vom Normalbetrieb abweichendes Betriebsgeräusch und/oder zusätzliche Geräusche bzw. Störgeräusche für den Nutzer bemerkbar macht. Um den Fehler zu erfassen bzw. zu analysieren wird im Rahmen des vorgeschlagenen Verfahrens ein dem Nutzer zugeordnetes mobiles Endgerät 150 eingesetzt, welches eine Aufnahmevorrichtung 160 zur Erfassung der von dem Kühlschrank abgegebenen Geräusche bzw. des Betriebsgeräusches 110 aufweist. Beispielsweise kann das mobile Endgerät als ein Mikrofon 160 sowie eine Anzeigevorrichtung 170 aufweisendes Mobiltelefon bzw. Smartphone ausgestaltet sein. Auf dem Smartphone ist z.B. eine vom Hersteller des Kühlschrankes 100 zur Verfügung gestellte Analyse-Anwendung (auch als "App" bezeichnet) gespeichert, durch deren Ausführung eine Analyse der über das Mikrofon 160 erfassten Geräusche 110 ermöglicht wird.

Das Smartphone 150 ist über ein durch einen Mobilfunkanbieter betriebenes, mobiles Kommunikationsnetz 200 (welches z.B. gemäß einem der aktuellen Mobilfunkstandards wie GSM, UMTS oder LTE ausgestaltet ist) mit einem auch als "Internet" bezeichneten globalen, weltweiten Kommunikationsnetz 300 verbindbar. Im globalen Kommunikationsnetz 300 ist ein virtueller Speicher bzw. Netzwerkspeicher 350 angeordnet, welcher auch als "Cloud-Speicher" bezeichnet wird.

Im Rahmen einer ersten Ausgestaltungsvariante des vorgeschlagenen Verfahrens wurde seitens des Herstellers des Kühlschrankes 100 eine Vielzahl unterschiedlicher, für den Kühlschrank 100 spezifischer Betriebsgeräusche 400 bis 450 als Referenz-Geräusche im virtuellen Speicher 350 hinterlegt bzw. gespeichert - auch als "Online-Datenbank" bezeichnet. Dazu ist ein Kundendienst-Center 500 des Herstellers über eine Datenverbindung 510 an das globale Kommunikationsnetz 300 angeschlossen und mit dem virtuellen Speicher 350 verbindbar. Virtuelle Speicher bzw. Cloud-Speicher sind explizit einem Nutzer oder einer Nutzergruppe zugeordnet, wobei von dem Nutzer oder der Nutzergruppe autorisierte bzw. berechtigte Personen oder Einrichtungen weltweit autorisierten Zugriff auf die im virtuellen Speicher gespeicherten Informationen haben. So kann im Rahmen des vorgeschlagenen Verfahrens der virtuelle Speicher 350 dem Hersteller des Kühlschrankes 100 zugeordnet und von diesem in der Art und Weise administriert sein, dass jeder (z.B. durch Registrierung bekannte) Käufer bzw. Nutzer eines von diesem Hersteller erworbenen Kühlschranks Zugriff auf die Online-Datenbank bzw. die darin gespeicherten Referenz-Geräusche hat, beispielsweise über die im Smartphone 150 gespeicherte Analyse-Anwendung, welche die für den Zugriff auf die Online-Datenbank erforderlichen Adressdaten gespeichert hat.

Die gespeicherten Referenz-Geräusche 400 bis 450 können dabei beispielsweise die für die jeweiligen Betriebszustände des Kühlschranks 100 charakteristischen Betriebsgeräusche repräsentieren. Alternativ oder zusätzlich können auch die jeweils von den Einzelkomponenten des Kühlschranks (wie z.B. Motor, Kühlaggregat oder Ventilator) im Normalbetrieb verursachten Einzelgeräusche gespeichert sein. Alternativ oder zusätzlich können auch verschiedene für den Kühlschrank 100 bekannte bzw. spezifische Störgeräusche Bestandteil der gespeicherten Referenz-Geräusche 400 bis 450 sein.

Bei z.B. durch den Nutzer wahrgenommenen Störgeräuschen des Kühlschrankes 100 (welches z.B. ein normales Betriebsgeräusch des Kühlschranks überlagert) wird durch den Nutzer das Smartphone 150 in der Nähe des Kühlschrankes positioniert und die Analyse-Anwendung gestartet bzw. aufgerufen. Nach erfolgtem Start der Analyse-Anwendung werden die vom Kühlschrank abgegebenen Geräusche 110 durch das Mikrofon 160 erfasst. Weiterhin wird durch die Analyse-Anwendung eine Datenverbindung vom Smartphone 150 über das mobile Kommunikationsnetz 200 zu dem im Internet 300 angeordneten virtuellen Speicher 350 eingerichtet. Mit Hilfe der eingerichteten Datenverbindung 600 werden, gesteuert durch die Analyse-Anwendung, die erfassten Geräusche 110 mit den im virtuellen Speicher 350 gespeicherten Referenz-Geräuschen 400 bis 450 verglichen bzw. abgeglichen. Im Rahmen des Abgleichs kann beispielsweise eine Übereinstimmung der erfassten Geräusche 110 (insbesondere des darin enthaltenen Störgeräusches) mit einem oder mehreren in der Online-Datenbank gespeicherten Störgeräusche 400 bis 450 festgestellt werden. Diese Übereinstimmung, d.h. das Erkennen eines bekannten Störgeräusches in den vom Kühlschrank 100 aktuell abgegebenen Geräuschen 110, wird dem Nutzer des Smartphone über die Anzeigevorrichtung 170 als Analyse-Ergebnis angezeigt. Im Falle einer fehlenden Übereinstimmung wird dem Nutzer als Ergebnis der Analyse beispielsweise ein störungsfreier Normalbetrieb des Kühlschranks 100 angezeigt. Alternativ kann bei fehlender Übereinstimmung keine Anzeige oder sonstige weitere Aktion erfolgen.

Optional kann das Analyse Ergebnis vom Smartphone 150 über eine weitere über das mobile Kommunikationsnetz 200 eingerichtete Datenverbindung 700 an das Kundendienst-Center 500 des Kühlschrankherstellers zur weiteren oder zusätzlichen Prüfung weitergeleitet werden. Zusätzlich zum Analyse-Ergebnis können auch die über das Mikrofon 150 erfassten Geräusche 110 an das Kundendienst-Center 500 weitergeleitet werden.

Gemäß einer alternativen in Fig.1 nicht dargestellten Ausgestaltungsvariante der vorgeschlagenen Lösung sind die Referenz-Geräusche 400 bis 450 in einem Speicher des Smartphone 150 gespeichert. Bei dieser Ausgestaltungsvariante kann durch die auf dem Smartphone ablaufende Analyse-Anwendung direkt, d.h. ohne zusätzlich eingerichtete Datenverbindung auf die Referenz-Geräusche 400 bis 450 zugegriffen werden.

Anstatt im Smartphone 150 ist gemäß einer weiteren nicht dargestellten Ausgestaltungsvariante zumindest ein Teil der Analyse-Anwendung den im Internet 300 oder einer Online-Datenbank gespeicherten Referenz-Geräuschen 400 bis 450 als virtuelle Analyse-Anwendung zugeordnet - auch als "Cloud-Anwendung" bzw. "Cloud-Dienst" bezeichnet. Bei dieser Ausgestaltungsvariante werden die erfassten Geräusche 110 vom Smartphone 150 über eine entsprechend eingerichtet Datenverbindung an die Cloud-Anwendung übermittelt bzw. übergeben. Durch die Cloud-Anwendung werden die übermittelten Geräusche 110 mit den gespeicherten Referenz-Geräuschen 400 bis 450 verglichen und basierend auf der Analyse eine vorgegebenen Aktion durchgeführt, z.B. eine das Ergebnis der Analyse repräsentierende Auswerte-Information generiert, welche zumindest eine Übereinstimmung bzw. zumindest einen Treffer mit einem der gespeicherten Referenz-Signale 400 bis 450 anzeigt. Die Auswerte-Information wird über die Datenverbindung an das Smartphone 150 übermittelt und über die Anzeigevorrichtung 170 dem Nutzer angezeigt. Alternativ kann die Auswerte-Information bzw. das Ergebnis der Analyse auf beliebige, für den Nutzer geeignete Art und Weise, übermittelt werden, beispielsweise in Form einer Textnachricht per SMS an das Smartphone oder per E-Mail an ein Mail-Konto des Nutzers.

Gemäß einer weiteren nicht dargestellten Ausgestaltungsvariante werden die über die Aufnahmevorrichtung 160 erfassten Geräusche 110 über eine Datenverbindung von dem Smartphone 150 an das Kundendienst-Center 500 übermittelt, durch welches die übermittelten Geräusche 110 hinsichtlich Störungen oder Fehler analysiert werden. Die Erfassung der Geräusche 110 sowie deren Übermittlung an das Kundendienst-Center 500 kann dabei wieder durch eine im Smartphone 150 gespeicherte Anwendung bzw. "App" gesteuert werden.

Alternativ kann die Erfassung und Übermittlung der Geräusche 110 mit auf dem Smartphone bereits installierten Standardprogrammen erreicht werden. So kann das vom Kühlschrank verursachte Betriebsgeräusch 110 mit Hilfe einer "Rekorder-Anwendung" aufgezeichnet werden und anschließend das aufgezeichnete Betriebsgeräusch mit Hilfe einer auf dem Smartphone ausführbaren E-Mail Anwendung an das Kundendienst-Center 500 übermittelt werden.

Es sei angemerkt, dass anstelle des Smartphone jede Art mobiler Endgeräte wie Laptop oder Tablet-PC im Rahmen der vorgeschlagenen Lösung eingesetzt werden können. Dabei wird vorausgesetzt dass ein derartiges Endgerät Mittel zur Erfassung von Geräuschen wie z.B. ein Mikrofon aufweist oder diesem zugeordnet sind. Die für die Durchführung des vorgeschlagenen Verfahrens gegebenenfalls erforderliche Einrichtung von Datenverbindungen 600, 700 kann über allgemein bekannte Mechanismen zur elektronischen Informationsübermittlung erfolgen, wie z.B. die Einrichtung von permanenten oder temporären Verbindungen in das Internet über beispielsweise Heimnetze, Mobilfunknetze oder Hotspots.

Optional können die im virtuellen Speicher 350 oder im Speicher des Smartphone 150 gespeicherten Referenz-Geräusche 400 bis 450 als vom Nutzer abhörbare Geräusch-Gallerie genutzt werden. Dabei können vom Nutzer bestimmte Geräusche aus den gespeicherten Referenz-Geräuschen 400 bis 450 selektiert und über einen im Smartphone angeordneten Lautsprecher oder Kopfhörer akustisch wiedergegeben werden. Dem Nutzer wird es dadurch auf einfache Art und Weise ermöglicht, das aktuell vom Kühlschrank abgegebene Betriebsgeräusch (bzw. die gegebenenfalls darin enthaltenen Einzelsignale) mit beispielsweise für den Kühlschrank signifikanten Störgeräuschen auf akustischen Wege (durch Geräuschevergleich) zu vergleichen. Damit wird dem Nutzer eine komfortable Möglichkeit der Funktionsüberprüfung für jede Art von Haushaltsgerät zur Verfügung gestellt.

Gemäß einer vorteilhaften Weiterbildung des vorgeschlagenen Verfahrens können bei der Analyse der erfassten Geräusche zusätzlich akustische Parameter wie beispielsweise Frequenzverhalten oder Spektralverläufe berücksichtigt werden.

Alternativ erfolgt bei einer weiteren, von den Ansprüchen nicht abgedeckten Ausgestaltungsvariante die Analyse der erfassten Betriebsgeräusche nur durch Auswertung von akustischen Parametern, d.h. ohne die Verwendung von vorab gespeicherten Referenz-Geräuschen.

In aktuellen Haushalten eingesetzte Haushaltsgeräte können beispielsweise über ein im Haushalt angeordnetes Kommunikationsnetz bzw. Heimnetz vernetzt sein - auch als "Smart Home" bezeichnet. Desweiteren können derartig vernetzte Haushaltsgeräte über das Heimnetz mit dem Internet verbindbar sein. Gemäß einer weiteren nicht dargestellten und nicht von den Ansprüchen abgedeckten Ausgestaltungsvariante kann das durch das Haushaltsgerät verursachte Betriebsgeräusch durch das Haushaltsgerät selbst mittels geeigneter im oder am Haushaltsgerät angeordneter Aufzeichnungsmittel (wie z.B. Mikrofon) erfasst werden. Durch eine z.B. im Haushaltsgerät angeordnete Steuerung bzw. Steueranwendung wird das erfasste Betriebsgeräusch in beschriebener Art und Weise beispielweise im Rahmen einer Cloud-Lösung über eine eingerichtete Internetverbindung an eine im Internet angeordneten oder über das Internet ausführbaren Analyse-Anwendung ("Cloud-Anwendung") zur weiteren Verarbeitung weitergeleitet. In Abhängigkeit von dem Analyse-Ergebnis wird eine entsprechende Auswerte-Information durch die Cloud-Anwendung generiert. Die Auswerte-Information kann z.B. in Form einer Textnachricht per SMS an ein Mobiltelefon des Nutzers oder per E-Mail an ein entsprechendes Mail-Konto des Nutzers weitergeleitet werden. Optional kann die Auswerte-Information an das Kundendienst-Center des Haushaltsgeräteherstellers übermittelt werden. Durch das Kundendienst-Center kann der Nutzer über das Analyse-Ergebnis entsprechend informiert werden (beispielsweise per Brief, FAX, E-Mail oder durch Anruf).

Es sei angemerkt dass im Rahmen des vorgeschlagenen Verfahrens ein oder mehrere beliebig vorgebbare Aktionen basierend auf der Analyse des zumindest einen erfassten Geräusches durchführbar sind. So kann das Ergebnis der Analyse in beliebiger Form (z.B. SMS; E-Mail, FAX, postalische Zustellung oder in einem spezifischen Datenformat der Analyse-Anwendung) über jede Art von Kommunikationsnetz oder Übertragungsweg zum Nutzer übermittelt werden. Alternativ oder zusätzlich kann auch zumindest ein Steuersignal zur Ansteuerung von (z.B. akustischen oder visuellen) Anzeigemitteln generiert werden. Auch kann eine beliebige Kombination der oben genannten Möglichkeiten im Rahmen der zumindest einen vorgegebenen Aktion durchgeführt werden.

### Bezugszeichenliste

- 100: Haushaltsgerät
- 110: Geräusche
- 150: mobiles Endgerät
- 160: Mikrofon
- 170: Anzeigevorrichtung
- 200: mobiles Kommunikationsnetz
- 300: globales Kommunikationsnetz ("Internet")
- 350: Netzwerkspeicher
- 400 bis 450: Referenz-Geräusche
- 500: Kundendienstcenter
- 510: Datenverbindung
- 600: Datenverbindung
- 700: Datenverbindung

## Patentansprüche

1. Verfahren zur Analyse zumindest eines Betriebsgeräusches (110) zumindest eines Haushaltsgerätes (100), wobei
- zumindest ein bei Betrieb durch das zumindest eine Haushaltsgerät (100) verursachtes Betriebsgeräusch (110) erfasst wird,
- eine Analyse des zumindest einen erfassten Betriebsgeräusches (110) durchgeführt wird und
- basierend auf der Analyse zumindest eine vorgegebene Aktion durchgeführt wird,
- wobei das zumindest eine Betriebsgeräusch (110) mit Hilfe eines mobilen Endgerätes (150) erfasst wird und
- die Analyse des zumindest einen erfassten Betriebsgeräusches (110) durch eine auf dem mobilen Endgerät (150) ablaufende oder ablauffähige Anwendung erfolgt,
**dadurch gekennzeichnet, dass**
- bei der Analyse das zumindest eine erfasste Betriebsgeräusch (110) mit weiteren Geräuschen (400 bis 450) verglichen wird und mehrere Treffer als Ergebnis der Analyse ausgegeben werden.

2. Verfahren nach Anspruch 1, bei dem das mobile Endgerät (150) mit einem Kommunikationsnetz (300) verbindbar ist.

3. Verfahren nach Anspruch 1, bei dem zumindest ein weiteres Geräusch (400 bis 450) zentral gespeichert ist.

4. Verfahren nach einem der vorhergehenden Ansprüche, bei dem zumindest ein weiteres Geräusch (400 bis 450) in einem dem mobilen Endgerät (150) zugeordneten Speicher gespeichert ist.

5. Verfahren nach einem der vorhergehenden Ansprüche, bei dem basierend auf der Analyse ein fehlerhafter Betriebszustand des Haushaltsgerätes (100) bestimmt wird.

6. Verfahren nach Anspruch 5, bei dem ein Fehler und/oder eine Fehlerart des Haushaltsgerätes (100) bestimmt wird.

7. Verfahren nach einem der vorhergehenden Ansprüche, bei dem das zumindest eine erfasste Betriebsgeräusch (110) und/oder ein Ergebnis der Analyse an ein Kundendienst-Center (500) weitergeleitet wird.

8. Mobiles Endgerät (150) zur Analyse zumindest eines Betriebsgeräusches (110) zumindest eines Haushaltsgerätes (100), mit
- einer Erfassungseinheit (160) zum Erfassen zumindest eines bei Betrieb durch das zumindest eine Haushaltsgerät (100) verursachten Betriebsgeräusches (110) und
- einer Verarbeitungseinheit die derart ausgestaltet ist, dass
- eine Analyse des zumindest einen erfassten Betriebsgeräusches durch eine auf dem mobilen Endgerät (150) ablaufende oder ablauffähige Anwendung durchgeführt wird und
- basierend auf der Analyse zumindest eine vorgegebene Aktion durchgeführt wird,
**dadurch gekennzeichnet, dass**
- die Verarbeitungseinheit derart ausgestaltet ist, dass bei der Analyse das zumindest eine erfasste Betriebsgeräusch (110) mit weiteren Geräuschen (400 bis 450) verglichen wird und mehrere Treffer als Ergebnis der Analyse ausgegeben werden.

9. Mobiles Endgerät nach Anspruch 8, **gekennzeichnet durch** die Ausgestaltung als mobiles Kommunikationsendgerät oder Smartphone.

10. Computerprogrammprodukt, geeignet zum Laden in einen Speicher eines mobilen Endgeräts (150), umfassend Programmcodeteile, die dazu geeignet sind, ein Verfahren nach einem der Ansprüche 1 bis 7 durchzuführen.

## Claims

1. Method for analysing at least one operating noise (110) of at least one household appliance (100), wherein
- at least one operating noise (110) produced by the at least one household appliance (100) during operation is detected,
- an analysis of the at least one detected operating noise (110) is performed, and
- based on the analysis at least one predetermined action is performed,
- wherein the at least one operating noise (110) is detected by means of a mobile terminal (150) and
- the analysis of the at least one detected operating noise (110) is performed by an application running or capable of running on the mobile terminal (150), **characterised in that**
- during the analysis, the at least one detected operating noise (110) is compared with further noises (400 to 450) and a plurality of hits are output as the result of the analysis.

2. Method according to claim 1, wherein the mobile terminal (150) can be connected to a communications network (300).

3. Method according to claim 1, wherein the at least one further noise (400 to 450) is stored centrally.

4. Method according to one of the preceding claims, wherein the at least one further noise (400 to 450) is stored in a memory associated with the mobile terminal (150).

5. Method according to one of the preceding claims, wherein based on the analysis a faulty operating state of the household appliance (100) is determined.

6. Method according to claim 5, wherein a fault and/or a type of fault of the household appliance (100) is determined.

7. Method according to one of the preceding claims, wherein the at least one detected operating noise (110) and/or a result of the analysis is forwarded to a customer service centre (500).

8. Mobile terminal (150) for analysing at least one operating noise (110) of at least one household appliance (100), having
- a detection unit (160) for detecting at least one operating noise (110) produced by the at least one household appliance (100) during operation and
- a processing unit which is configured such that
- an analysis of the at least one detected operating noise is performed by an application running or capable of running on the mobile terminal (150), and
- based on the analysis at least one predetermined action is performed, **characterised in that**
- the processing unit is configured such that, during the analysis, the at least one detected operating noise (110) is compared with further noises (400 to 450) and a plurality of hits are output as the result of the analysis.

9. Mobile terminal according to claim 8, **characterised by** the configuration as a mobile communication terminal or smartphone.

10. Computer program product suitable for loading into a memory of a mobile terminal (150), comprising program code parts suitable for performing a method according to one of claims 1 to 7.

## Revendications

1. Procédé d'analyse d'au moins un bruit de fonctionnement (110) d'au moins un appareil ménager (100), dans lequel
- au moins un bruit de fonctionnement (110) causé par l'au moins un appareil ménager (100) est saisi,
- une analyse de l'au moins un bruit de fonctionnement (110) saisi est effectuée, et
- au moins une action prescrite est effectuée sur la base de l'analyse,
- dans lequel l'au moins un bruit de fonctionnement (110) est saisi à l'aide d'un terminal mobile (150) et
- l'analyse de l'au moins un bruit de fonctionnement (110) saisi s'opère via une application exécutée ou exécutable sur le terminal mobile (150),
**caractérisé en ce que**,
- lors de l'analyse, l'au moins un bruit de fonctionnement (110) est comparé à d'autres bruits (400 à 450) et plusieurs résultats positifs sont émis comme résultat de l'analyse.

2. Procédé selon la revendication 1, dans lequel le terminal mobile (150) peut être relié à un réseau de communication (300).

3. Procédé selon la revendication 1, dans lequel au moins un bruit supplémentaire (400 à 450) est enregistré de façon centrale.

4. Procédé selon l'une des revendications précédentes, dans lequel au moins un bruit supplémentaire (400 à 450) est enregistré dans une mémoire affectée au terminal mobile (150).

5. Procédé selon l'une des revendications précédentes, dans lequel un état de fonctionnement défaillant de l'appareil ménager (100) est déterminé sur la base de l'analyse.

6. Procédé selon la revendication 5, dans lequel une défaillance et/ou un type de défaillance de l'appareil ménager (100) est déterminé(e).

7. Procédé selon l'une des revendications précédentes, dans lequel l'au moins un bruit de fonctionnement (110) saisi et/ou un résultat de l'analyse est transmis à un centre de service à la clientèle (500).

8. Terminal mobile (150) pour l'analyse d'au moins un bruit de fonctionnement (110) d'au moins un appareil ménager (100), avec
- une unité de saisie (160) pour la saisie d'au moins un bruit de fonctionnement (110) causé par le fonctionnement de l'au moins un appareil ménager (100) et
- une unité de traitement aménagée de sorte
à ce qu'une analyse de l'au moins un bruit de fonctionnement saisi par une application exécutée ou exécutable sur le terminal mobile (150) s'effectue et l'au moins une action prescrite est effectuée sur la base de l'analyse,
**caractérisé en ce que**
- une unité de traitement aménagée de sorte que, lors de l'analyse, l'au moins un bruit de fonctionnement (110) saisi étant comparé à au moins un bruit supplémentaire (400 à 450), et plusieurs résultats positifs sont émis comme résultat de l'analyse.

9. Terminal mobile selon la revendication 8, **caractérisé par** son aménagement sous forme de terminal de communication mobile ou de smartphone.

10. Produit de programme informatique approprié pour le chargement dans une mémoire d'un terminal mobile (150), comprenant des parties de code de programme appropriées afin d'exécuter un procédé selon l'une des revendications 1 à 7.
